# EUROPÄISCHE PATENTSCHRIFT

(11) **EP 1 228 631 B1**
(45) Veröffentlichungstag und Bekanntmachung des Hinweises auf die Patenterteilung: **26.05.2004**
(21) Anmeldenummer: 00988571.6
(22) Anmeldetag: 07.11.2000
(51) Int. Cl.: H04M 15/28

(54) **SCHALTUNGSANORDNUNG ZUR GEBÜHRENIMPULSERKENNUNG**
CIRCUIT ARRANGEMENT FOR RECOGNITION OF A METERING PULSE
ENSEMBLE CIRCUIT POUR LA RECONNAISSANCE D'IMPULSIONS DE TAXATION

(30) Priorität: 09.11.1999 DE 19953889
(43) Veröffentlichungstag der Anmeldung: 07.08.2002
(73) Patentinhaber: Infineon Technologies AG, 81669 München (DE)
(72) Erfinder: DÖRRER, Lukas, A-9500 Villach (AT); KRANZ, Christian, 40885 Ratingen (DE); KRAH, Bernd, 80807 München (DE)
(74) Vertreter: Lange, Thomas, Dr.
(86) Internationale Anmeldenummer: PCT/DE2000/003927
(87) Internationale Veröffentlichungsnummer: WO 2001/035626

(56) Entgegenhaltungen:
- EP-A- 0 200 847
- GB-A- 2 313 017
- US-A- 3 852 533
- US-A- 5 862 469

## Beschreibung

Die vorliegende Erfindung betrifft eine Schaltungsanordnung nach dem Oberbegriff des Anspruches 1 zur Gebührenimpulserkennung in Telekommunikationsnetzen.

In den Telefonnetzen zahlreicher Länder werden Gebührenimpulse von den Ortsvermittlungsstellen zu den Teilnehmern geleitet. In den Teilnehmer-Endgeräten werden diese in Übereinstimmung mit einem bestimmten Abrechnungstakt erzeugten Gebührenimpulse erkannt und gezählt, um dem jeweiligen Teilnehmer die während einer Telefonverbindung anfallenden Verbindungskosten mitzuteilen.

Die Gebührenimpulse werden in Form von kurzen Signalbursts einer vorgeschriebenen Frequenz außerhalb des Sprach-Frequenzbandes erzeugt. Als Frequenz für die Gebührenimpulse werden beispielsweise 12kHz, 16kHz und seltener auch 50Hz verwendet.

Die technischen Anforderungen an die in den Teilnehmer-Endgeräten zur Gebührenimpulserkennung vorgesehenen Schaltungsanordnungen sind sehr stark länderabhängig. So beträgt die minimale Spannungshöhe der Gebührenimpulse am Teilnehmer-Endgerät beispielsweise in Schweden lediglich 5,5mV, während sie in Belgien deutlich höher ist und 20mV beträgt. Darüber hinaus sind in verschiedenen Ländern strenge Anforderungen zur Unterscheidung zwischen gültigen und ungültigen Gebührenimpulsen zu beachten. So sind beispielsweise in Italien Gebührenimpulse mit einer Spannung von 50mV ungültig, während Gebührenimpulse mit einer Spannung von 65mV bereits gültig sind. Andererseits beträgt die maximal zulässige Spannung für Gebührenimpulse bis zu 10V. Diese Beispiele machen deutlich, daß in den Teilnehmer-Endgeräten zur Gebührenimpulserkennung Spezialschaltungen mit einer hohen Empfindlichkeit erforderlich sind, um die zuvor beschriebenen Zulassungsvorschriften zu erfüllen.

Aus der Patentanmeldung EP 0 200 847 A2 ist ein Verfahren und eine Einrichtung zum Senden und zum Empfangen von trägerfrequenten Telefontaximpulsen bekannt. Die empfangenen Taximpulse werden durch eine Kaskadenschaltung verarbeitet. Diese Kaskadenschaltung weist in einem ersten Teil der Schaltungsanordnung in Reihe geschaltet einen Umschalter, einen Impedanzwandler, einen Bandpassfilter, einen Pegel-Regelverstärker und einen Komparator auf. Das Ausgangssignal des Komparators wird an einen Phasenregelkreis angelegt, mit welchem die Empfangs-Trägerfrequenz der empfangenen Taximpulse ermittelt wird. Der Phasenregelkreis wird dazu durch eine Sende-Trägerfrequenz geeicht, wobei diese Sende-Trägerfrequenz durch einen Hochfrequenz-Generator erzeugt wird. Das Ausgangssignal des Phasenregelkreises wird an eine Impuls-Aufbereitungsschaltung angelegt, welche Gleichspannungsimpulse erzeugt, wenn die Amplitude der Gleichspannungssignale am Ausgang des Phasenregelkreises Werte innerhalb eines Spannungsintervalls besitzen. Diese erzeugten Gleichspannungsimpulse entsprechen den Taximpulsen. Die Signalverarbeitung wird ausschließlich analog durchgeführt.

Die bekannte Vorrichtung ist sehr komplex und aufwändig aufgebaut und dadurch in ihrer Miniaturisierung beschränkt.

In Basisstationen gemäß dem DECT-Mobilfunkstandard (Digital European Cordless Telephone) wurde zur Gebührenimpulserkennung eine Schaltungsanordnung mit einem analogen Komparator eingesetzt, der mit einer Hysterese und einem Offset von kleiner als 5mV ausgelegt ist. Dem Komparator folgt eine digitale Schaltung, die aus dem Ausgangssignal des Komparators die zuvor erwähnte Entscheidung bzgl. des Vorliegens oder Nichtvorliegens eines (12kHz/16kHz)-Gebührenimpulses generiert.

Diese Schaltungsanordung ist jedoch insofern problematisch, als daß die obigen Hysterese- und Offsetwerte nur mit einer integrierten Offsetkompensation erzielt werden können. Zudem ist infolge der Verwendung des analogen Komparators die für die gesamte Schaltungsanordnung benötigte Chipfläche sowie der Entwicklungsaufwand relativ hoch.

Der vorliegenden Erfindung liegt daher die Aufgabe zugrunde, eine Schaltungsanordnung zur Gebührenimpulserkennung mit einem reduzierten Realisierungsaufwand vorzuschlagen.

Diese Aufgabe wird erfindungsgemäß durch eine Schaltungsanordnung mit den Merkmalen des Anspruches 1 gelöst. Die Unteransprüche definieren bevorzugte und vorteilhafte Ausführungsformen der vorliegenden Erfindung.

Die erfindungsgemäße Schaltungsanordnung umfaßt einen Analog/Digital- oder A/D-Wandler zum A/D-Wandeln des die Gebührenimpulse aufweisenden Signals sowie einen digitalen Komparator, der das Ausgangssignal des A/D-Wandlers mit einem Referenzwert vergleicht, wobei das Ausgangssignal des digitalen Komparators von einem Detektor ausgewertet wird, der die Entscheidung trifft, ob ein (gültiger) Gebührenimpuls vorliegt oder nicht und die Gebührenimpulse zählt. Die erfindungsgemäße Schaltungsanordnung verzichtet somit auf den ansonsten üblichen analogen Komparator. Die Chipfläche und der Entwicklungsaufwand können folglich reduziert werden.

Der Realisierungsaufwand ist bei der vorliegenden Erfindung insbesondere deshalb sehr gering, da beispielsweise in Controllern von Mobilfunk-Endgeräten und auch in vielen anderen Teilnehmer-Endgeräten systembedingt ohnehin ein A/D-Wandler zum A/D-Wandeln verschiedener anderer Signale erforderlich und vorgesehen ist. Dieser A/D-Wandler kann somit anstelle des ansonsten separaten analogen Komparators zur Gebührenimpulserfassung genutzt werden.

Durch die Verwendung eines Hochpaßfilters zwischen dem A/D-Wandler und dem digitalen Komparator kann der Gleichanteil des abgetasteten Eingangssignals unterdrückt werden. Durch die Verwendung einer programmierbaren Verstärkerstufe kann die Empfindlichkeit beeinflußt und an die jeweiligen Anforderungen angepaßt werden. Ebenso kann dem digitalen Komparator ein Überabtaster und ein Interpolationsfilter zur Erhöhung der Abtastfrequenz und somit zur Verbesserung der Frequenzgenauigkeit der Schaltungsanordnung vorgeschaltet sein.

Die vorliegende Erfindung eignet sich prinzipiell zum Einsatz in allen Telekommunikationsgeräten, wo eine Gebührenimpulserkennung gewünscht ist, wobei die Erfindung insbesondere zum Einsatz in beispielsweise gemäß dem DECT-Mobilfunkstandard betriebenen Mobilfunk-Endgeräten geeignet ist.

Die vorliegende Erfindung wird nachfolgend anhand eines bevorzugten Ausführungsbeispiels unter Bezugnahme auf die beigefügte Zeichnung näher erläutert.
Fig. 1 zeigt eine vereinfachtes Blockschaltbild einer Schaltungsanordnung zur Gebührenimpulserkennung gemäß einem bevorzugten Ausführungsbeispiel der vorliegenden Erfindung,
Fig. 2 zeigt eine Darstellung zur Verdeutlichung der Funktionsweise von in Fig. 1 gezeigten Eingangsmultiplexern,
Fig. 3 zeigt ein Ausführungsbeispiel für ein in Fig. 1 dargestelltes Hochpaßfilter, und
Fig. 4 zeigt ein Ausführungsbeispiel für ein in Fig. 1 dargestelltes Interpolationsfilter.

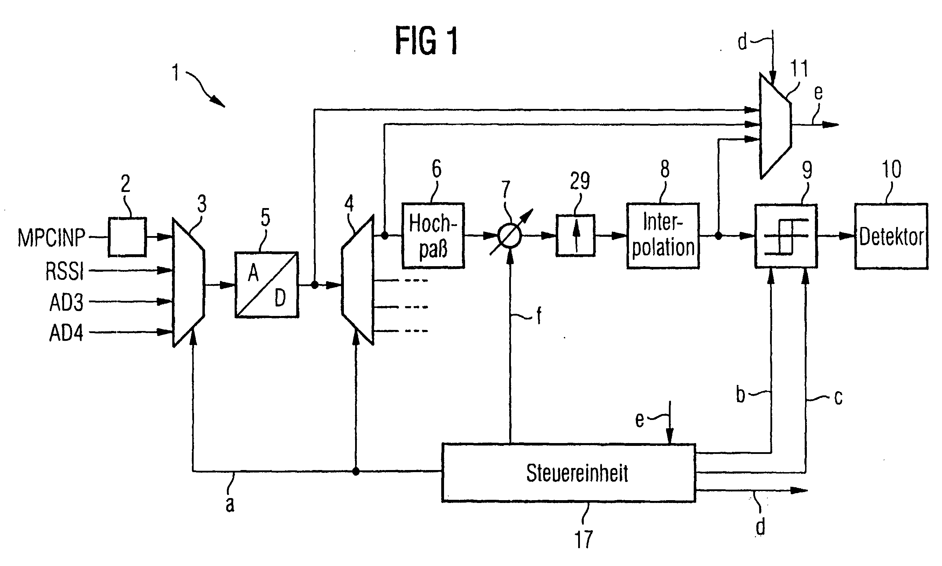

Die in Fig. 1 gezeigte Schaltungsanordnung 1 zur Gebührenimpulserkennung, die beispielsweise in einem Mobilfunkgerät einsetzbar ist, umfaßt eingangsseitig einen A/D-Wandler 5, dem ein die Gebührenimpulse aufweisendes Signals MPCINP ("Meter Puls Comparator Input") über einen Pegelverschieber ("Level Shifter") 2 zugeführt wird. Da der A/D-Wandler 5 zur Reduzierung des schaltungstechnischen Aufwands auch zum A/D-Wandeln anderer analoger Signale RSSI, AD3 und AD4 vorgesehen ist, ist dem A/D-Wandler 5 ein erster Multiplexer 3 vor- und ein zweiter Multiplexer 4 nachgeschaltet. Beide Multiplexer 3, 4 werden von einem Steuersignal a) einer Steuereinheit 17 angesteuert, wobei der Multiplexer 3 abhängig von dem augenblicklichen Wert des Steuersignals a) jeweils einen seiner Eingänge mit seinem Ausgang und somit auch mit dem A/D-Wandler 5 verbindet, während der Multiplexer 4 abhängig von dem augenblicklichen Wert des Steuersignals a) das Ausgangssignal des A/D-Wandlers 5 jeweils einem von mehreren Signalpfade zuführt. In Fig. 1 ist der Übersichtlichkeit halber lediglich der zur Verarbeitung der Abtastwerte des MPCINP-Signals und somit zur Gebührenimpulserkennung vorgesehene Signalpfad dargestellt. Selbstverständlich sind ebenso Signalpfade zur Verarbeitung der einzelnen Abtastwerte des RSSI-, AD3- oder AD4-Signals vorgesehen und mit jeweils einem Ausgang des Multiplexers 4 verbunden, wobei diese Signalpfade jeweils für die vorliegende Erfindung keine Rolle spielen und daher nachfolgend unberücksichtigt bleiben. Es sei an dieser Stelle lediglich erwähnt, daß es sich bei dem RSSI-Signal beispielsweise um ein Feldstärkemeßsignal, bei dem AD3-Signal um ein Batteriespannung-Meßsignal und bei dem AD4-Signal um ein Strommeßsignal etc. des Mobilfunkgeräts handeln kann.

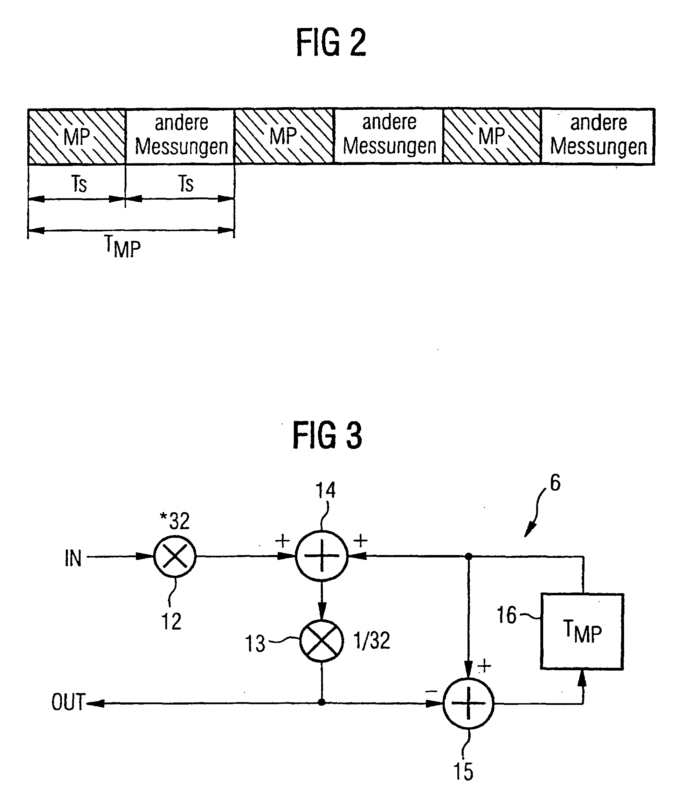

Der MPCINP-Eingang des Multiplexers 3 wird nach dem in Fig. 2 gezeigten Schema zeitlich gemultiplext. In Fig. 2 ist die Abtastperiode Tₛ des Multiplexers 3 dargestellt, so daß aus der Darstellung von Fig. 3 ersichtlich ist, daß mit jeder zweiten Messung oder Abtastung der MPCINP- oder Gebührenimpuls-Eingang des Multiplexers 3 gemessen wird. Die Gebührenimpuls-Meßperiode T_{MP} entspricht somit dem doppelten Wert der Abtastperiode T_{B} des Multiplexers 3. Dabei ist zu beachten, daß die inverse Gebührenimpuls-Meßperiode T_{MP} in Übereinstimmung mit dem Abtast-Theorem mindestens doppelt so groß wie die zu detektierende Gebührenimpulsfrequenz sein muß. Die anderen Abtastzeitpunkte des Multiplexers 3 stehen zur Messung der anderen Eingangssignale des Multiplexers 3 zur Verfügung. Wie bereits erwähnt worden ist, wird der Multiplexer 4 zeitlich synchron zu dem Multiplexer 3 geschaltet, um sicherzustellen, daß der Abtastwert des augenblicklich abgetasteten und A/Dgewandelten Eingangssignals des Multiplexers 3 stets dem korrekten Signalpfad zur weiteren Verarbeitung zugeführt wird.

Der dem Abtastwert des Gebührenimpuls- oder MPCINP-Signals zugeordnete und in Fig. 1 gezeigte Signalpfad umfaßt ein Hochpaßfilter 6, welches zur Unterdrückung des Gleichanteils des MPCINP-Signals vorgesehen ist. Mit Hilfe einer nachgeschalteten Verstärkerstufe 7 kann die Empfindlichkeit beeinflußt und insbesondere erhöht werden. Der Verstärkungsfaktor dieser Verstärkerstufe 7 ist über ein Steuersignal f) der Steuereinheit 17 programmierbar, so daß somit wahlweise beispielsweise zwischen den Verstärkungsfaktorwerten "x1", "x2" und "x4" umgeschaltet werden kann. Ein Überabtaster 29 ("Repeater") und ein Interpolationsfilter 8 dienen zur Erhöhung der Abtastfrequenz und somit zur Verbesserung der Frequenzgenauigkeit.

Die auf diese Weise verarbeiteten Abtastwerte des Gebührenimpulssignals MPCINP werden von einem digitalen Komparator 9 mit einem bestimmten Referenz- oder Mittelwert verglichen. Dieser Referenzwert ist vorzugsweise über ein Steuersignal b) der Steuereinheit 17 programmierbar, um die Vergleichsschwelle jeweils an die länderspezifischen Anforderungen anpassen zu können, da der in dem Gebührenimpulssignal enthaltene Gleichanteil von Land zu Land unterschiedlich sein kann. Der digitale Komparator 9 liefert abhängig davon, ob sein Eingangssignalwert größer bzw. kleiner als der Referenzwert ist, ein positives oder negatives Ausgangssignal. Im einfachsten Fall entspricht der Referenzwert des digitalen Komparators 9 dem Wert "Null", so daß von dem digitalen Komparator 9 die Nulldurchgänge des Ausgangssignals des A/D-Wandlers 5 erfaßt werden. Über ein weiteres Steuersignal c) der Steuereinheit 17 kann auch die Hysterese des digitalen Komparators programmiert werden.

Das Ausgangssignal des digitalen Komparators 10 wird von einer herkömmlichen digitalen Detektorschaltung 10 ausgewertet, um somit die (gültigen) Gebührenimpulse erkennen und zählen zu können.

In Fig. 1 ist der Vollständigkeit halber ein weiterer Multiplexer 11 dargestellt, der von einem weiteren Steuersignal d) angesteuert wird. Dem Multiplexer 11 sind Signalwerte an unterschiedlichen Stellen des von dem A/D-Wandler zu dem digitalen Komparator führenden Signalpfads zugeführt, wobei das Ausgangssignal e) des Multiplexers 11 der Steuereinheit 17 zugeführt ist. Die Steuereinheit 17 kann somit abhängig von dem augenblicklichen Wert des Steuersignals d) die jeweils augenblicklichen Signalwerte an den entsprechenden Stellen dieses Signalpfads überwachen. Der Multiplexer 11 dient ausschließlich zu Testzwecken und ist für die vorliegende Erfindung im Prinzip ohne Belang.

In Fig. 3 ist ein Ausführungsbeispiel für das in Fig. 1 gezeigte digitale Hochpaßfilter 6 dargestellt. Das Eingangssignal IN des Hochpaßfilters 6 wird zunächst mit Hilfe eines Multiplizierers 12 mit dem Faktor 32 multipliziert. Anschließend folgt eine rekursive Filterstruktur, welche Addierer 14 und 15, einen Multiplizierer (Multiplikationsfaktor 1/32) oder Teiler 13 und ein Verzögerungsglied 16 mit einer der Gebührenimpul-Meßperiode T_{MP} entsprechenden Verzögerungsdauer umfaßt, wobei die einzelnen Komponenten wie in Fig. 3 gezeigt verschaltet sind. Das Ausgangssignal OUT dieses rekursiven digitalen Hochpaßfilters 6 wird wie in Fig. 1 gezeigt der Verstärkerstufe 7 zugeführt. Die Multiplikationsfaktoren der Multiplizierer 12 und 13 entsprechen jeweils Zweierpotenzen, so daß sich die Multiplikationen durch einfache Bitverschiebeoperationen realisieren lassen und keine echten hardwaremäßigen Multiplizierer, die einen relativ komplexen Aufbau aufweisen, erforderlich sind.

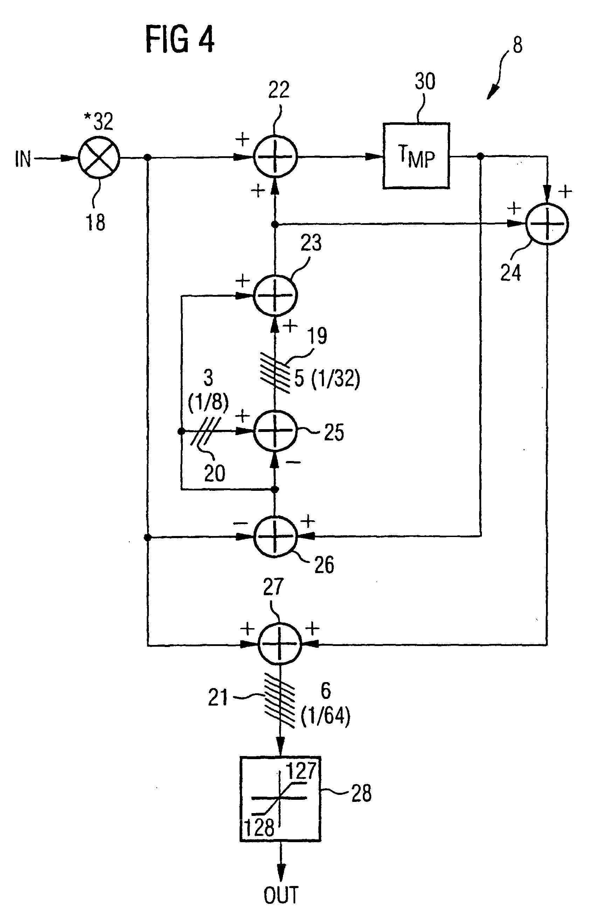

In Fig. 4 ist ein Ausführungsbeispiel für das in Fig. 1 gezeigte Interpolationsfilter 8 dargestellt. Das Interpolationsfilter umfaßt einen Multiplizierer 18, Teiler 19-21, Addierer 24-27 und ein Verzögerungsglied 30, wobei die einzelnen Komponenten wie in Fig. 4 gezeigt verschaltet sind. Auch im Falle des Interpolationsfilters 8 lassen sich alle Multiplikations- oder Teilerfaktoren durch Zweierpotenzen darstellen, so daß sich die Multiplizier- bzw. Teiloperationen durch einfache Bitverschiebeoperationen realisieren lassen. Der Teiler 19 besitzt beispielsweise den Teilerfaktor 1/32, was durch eine Bitverschiebung um fünf Bits nach rechts des entsprechenden digitalen Abtastworts realisiert werden kann. Für jeden Teiler 19-21 ist in Fig. 4 die Anzahl der Bits, um die das jeweilige Abtastwort verschoben werden muß, in Form einer entsprechenden Anzahl von Strichen dargestellt. Des weiteren ist für jeden Teiler 19-21 diese Bitanzahl mit dem entsprechenden Teilerfaktor dargestellt. Das Ausgangssignal OUT des Interpolationsfilters 8 wird über einen Begrenzer 28 ausgegeben, der den jeweiligen Abtastwert auf einen Minimal- und Maximalwert begrenzt. Bei dem dargestellten Ausführungsbeispiel ist der Begrenzer 28 als 8Bit-Begrenzer ausgestaltet, so daß der von dem Begrenzer 28 begrenzte Wertebereich - 128...0...127 beträgt.

## Patentansprüche

1. Schaltungsanordnung zur Gebührenimpulserkennung,
mit Detektormitteln (9, 10) zum Erkennen und Zählen von der Schaltungsanordnung zugeführten Gebührenimpulsen bestimmter Frequenz und bestimmter Amplitude,
**dadurch gekennzeichnet,**
**daß** die Schaltungsanordnung eingangsseitig eine A/D-Wandlerschaltung (5) aufweist, welcher ein die Gebührenimpulse aufweisendes Signal (MPCINP) zugeführt ist, und
**daß** die Detektormittel eine digitale Komparatorschaltung (9) zum Vergleichen des Ausgangssignals der A/D-Wandlerschaltung (5) mit einem Referenzwert und eine Detektoreinheit (10) zum Auswerten des Ausgangssignals der digitalen Komparatorschaltung (9) umfaßt.

2. Schaltungsanordnung nach Anspruch 1,
**dadurch gekennzeichnet,**
**daß** das die Gebührenimpulse aufweisende Signal (MPCINP) der A/D-Wandlerschaltung (5) über einen Pegelverschieber (2) zugeführt ist.

3. Schaltungsanordnung nach Anspruch 1 oder 2,
**dadurch gekennzeichnet,**
**daß** zwischen die A/D-Wandlerschaltung (5) und die digitale Komparatorschaltung (9) ein digitales Interpolationsfilter (8) geschaltet ist.

4. Schaltungsanordnung nach Anspruch 3,
**dadurch gekennzeichnet,**
**daß** in Serie mit dem digitalen Interpolationsfilter (8) ein Begrenzer (28) geschaltet ist.

5. Schaltungsanordnung nach Anspruch 3 oder 4,
**dadurch gekennzeichnet,**
**daß** dem digitalen Interpolationsfilter (8) ein Überabtaster (29) zur Erhöhung der Abtastfrequenz vorgeschaltet ist.

6. Schaltungsanordnung nach einem der vorhergehenden Ansprüche,
**dadurch gekennzeichnet,**
**daß** zwischen die A/D-Wandlerschaltung (5) und die digitale Komparatorschaltung (9) eine Verstärkerstufe (7) mit einem programmierbaren Verstärkungsfaktor geschaltet ist.

7. Schaltungsanordnung nach einem der vorhergehenden Ansprüche,
**dadurch gekennzeichnet,**
**daß** zwischen die A/D-Wandlerschaltung (5) und die digitale Komparatorschaltung (9) ein digitales Hochpaßfilter (6) geschaltet ist.

8. Schaltungsanordnung nach den Ansprüchen 5, 6 und 7,
**dadurch gekennzeichnet,**
**daß** der Überabtaster (29) zwischen der Verstärkerstufe (7) und dem digitalen Interpolationsfilter (8) angeordnet ist.

9. Schaltungsanordnung nach einem der vorhergehenden Ansprüche,
**dadurch gekennzeichnet,**
**daß** die A/D-Wandlerschaltung (5) neben einer A/D-Wandlung des die Gebührenimpulse aufweisenden Signals (MPCINP) auch zur A/D-Wandlung weiterer Signale (RSSI, AD3, AD4) vorgesehen ist, und
**daß** das die Gebührenimpulse aufweisende Signal (MPCINP) und die weiteren Signale (RSSI, AD3, AD4) an jeweils einen Eingang einer Multiplexerschaltung (3) angelegt sind, wobei die Multiplexerschaltung (3), deren Ausgang mit der A/D-Wandlerschaltung (5) verbunden ist, in Abhängigkeit von einem Steuersignal (a) einen ihrer Eingänge mit ihrem Ausgang verbindet.

10. Schaltungsanordnung nach Anspruch 9,
**dadurch gekennzeichnet,**
**daß** die A/D-Wandlerschaltung (5) mit einer weiteren Multiplexerschaltung (4) verbunden ist, die das Ausgangssignal der A/D-Wandlerschaltung (5) abhängig von dem Steuersignal (a) einen von mehreren Signalpfaden zuführt, wobei einer dieser Signalpfade zu der digitalen Komparatorschaltung (9) führt.

11. Schaltungsanordnung nach Anspruch 10,
**dadurch gekennzeichnet,**
**daß** eine Steuereinheit (17) zur Erzeugung des Steuersignals (a) für die beiden Multiplexer (3, 4) vorgesehen ist, wobei die Steuereinheit (17) das Steuersignal (a) derart erzeugt, daß mit jedem zweiten Abtastvorgang das die Gebührenimpulse aufweisende Signal (MPCINP) von der A/D-Wandlerschaltung (5) gemessen, A/D-gewandelt und der digitalen Komparatorschaltung (9) zugeführt wird.

12. Schaltungsanordnung nach einem der vorhergehenden Ansprüche,
**dadurch gekennzeichnet,**
**daß** der Referenzwert der digitalen Komparatorschaltung (9) programmierbar ist.

13. Schaltungsanordnung nach einem der vorhergehenden Ansprüche,
**dadurch gekennzeichnet,**
**daß** die Hysterese der digitalen Komparatorschaltung (9) programmierbar ist.

14. Schaltungsanordnung nach einem der vorhergehenden Ansprüche,
**dadurch gekennzeichnet,**
**daß** die Schaltungsanordnung zur Gebührenimpulserkennung in einer Mobilfunk-Basisstation eingesetzt ist.

## Claims

1. Circuit arrangement for metering pulse recognition,
having detector means (9, 10) for recognizing and counting metering pulses of particular frequency and particular amplitude which are supplied to the circuit arrangement,
**characterized**
**in that** the input of the circuit arrangement has an A/D converter circuit (5) to which a signal (MPCINP) containing the metering pulses is supplied, and
**in that** the detector means have a digital comparator circuit (9) for comparing the output signal from the A/D converter circuit (5) with a reference value, and a detector unit (10) for evaluating the output signal from the digital comparator circuit (9).

2. Circuit arrangement according to Claim 1,
**characterized**
**in that** the signal (MPCINP) containing the metering pulses is supplied to the A/D converter circuit (5) via a level shifter (2).

3. Circuit arrangement according to Claim 1 or 2,
**characterized**
**in that** a digital interpolation filter (8) is connected between the A/D converter circuit (5) and the digital comparator circuit (9).

4. Circuit arrangement according to Claim 3,
**characterized**
**in that** a limiter (28) is connected in series with the digital interpolation filter (8).

5. Circuit arrangement according to Claim 3 or 4,
**characterized**
**in that** an oversampler (29) is connected upstream of the digital interpolation filter (8) in order to increase the sampling frequency.

6. Circuit arrangement according to one of the preceding claims,
**characterized**
**in that** an amplifier stage (7) having a programmable gain factor is connected between the A/D converter circuit (5) and the digital comparator circuit (9).

7. Circuit arrangement according to one of the preceding claims,
**characterized**
**in that** a digital high-pass filter (6) is connected between the A/D converter circuit (5) and the digital comparator circuit (9).

8. Circuit arrangement according to Claims 5, 6 and 7,
**characterized**
**in that** the oversampler (29) is arranged between the amplifier stage (7) and the digital interpolation filter (8).

9. Circuit arrangement according to one of the preceding claims,
**characterized**
**in that** the A/D converter circuit (5) is provided not only for A/D conversion of the signal (MPCINP) containing the metering pulses but also for A/D conversion of further signals (RSSI, AD3, AD4), and
**in that** the signal (MPCINP) containing the metering pulses and the further signals (RSSI, AD3, AD4), are applied to a respective input of a multiplexer circuit (3), with the multiplexer circuit (3), whose output is connected to the A/D converter circuit (5), connecting one of its inputs to its output on the basis of a control signal (a).

10. Circuit arrangement according to Claim 9,
**characterized**
**in that** the A/D converter circuit (5) is connected to a further multiplexer circuit (4) which supplies the output signal from the A/D converter circuit (5) to one of a plurality of signal paths on the basis of the control signal (a), with one of these signal paths being routed to the digital comparator circuit (9).

11. Circuit arrangement according to Claim 10,
**characterized**
**in that** a control unit (17) is provided in order to produce the control signal (a) for the two multiplexers (3, 4), with the control unit (17) producing the control signal (a) such that, upon each second sampling operation, the A/D converter circuit (5) measures the signal (MPCINP) containing the metering pulses, subjects it to A/D conversion and supplies it to the digital comparator circuit (9).

12. Circuit arrangement according to one of the preceding claims,
**characterized**
**in that** the reference value in the digital comparator circuit (9) is programmable.

13. Circuit arrangement according to one of the preceding claims,
**characterized**
**in that** the hysteresis of the digital comparator circuit (9) is programmable.

14. Circuit arrangement according to one of the preceding claims,
**characterized**
**in that** the circuit arrangement is used for metering pulse recognition in a mobile radio base station.

## Revendications

1. Circuit de reconnaissance d'impulsions de taxation, ayant des moyens détecteurs (9, 10) pour la reconnaissance et le comptage d'impulsions de taxation qui ont une certaine fréquence et une certaine amplitude et qui sont envoyées au circuit,
**caractérisé par le fait que**
le circuit comporte en entrée un circuit convertisseur analogique-numérique (5) auquel est envoyé un signal (MPCINP) comportant les impulsions de taxation, et
les moyens détecteurs comprennent un circuit comparateur numérique (9) pour la comparaison du signal de sortie du circuit convertisseur analogique-numérique (5) à une valeur de référence et une unité de détection (10) pour l'évaluation du signal de sortie du circuit comparateur numérique (9).

2. Circuit selon la revendication 1,
**caractérisé par le fait que** le signal (MPCINP) comportant les impulsions de taxation est envoyé au circuit convertisseur analogique-numérique (5) par l'intermédiaire d'un dispositif de décalage de niveau (2).

3. Circuit selon la revendication 1 ou 2,
**caractérisé par le fait qu'**un filtre d'interpolation numérique (8) est branché entre le circuit convertisseur analogique-numérique (5) et le circuit comparateur numérique (9).

4. Circuit selon la revendication 3,
**caractérisé par le fait qu'**un limiteur (28) est branché en série avec le filtre d'interpolation numérique (8).

5. Circuit selon la revendication 3 ou 4,
**caractérisé par le fait qu'**un suréchantillonneur (29) destiné à augmenter la fréquence d'échantillonnage est branché du côté amont du filtre d'interpolation numérique (8).

6. Circuit selon l'une des revendications précédentes,
**caractérisé par le fait qu'**un étage amplificateur (7) avec un facteur d'amplification programmable est branché entre le circuit convertisseur analogique-numérique (5) et le circuit comparateur (9).

7. Circuit selon l'une des revendications précédentes,
**caractérisé par le fait qu'**un filtre passe-haut numérique (6) est branché entre le circuit convertisseur analogique-numérique (5) et le circuit comparateur (9).

8. Circuit selon l'une des revendications 5, 6 ou 7,
**caractérisé par le fait que** le suréchantillonneur (29) est placé entre l'étage amplificateur (7) et le filtre d'interpolation numérique (8).

9. Circuit selon l'une des revendications précédentes,
**caractérisé par le fait que**
le circuit convertisseur analogique-numérique (5) est prévu, outre pour une conversion analogique-numérique du signal (MPCINP) comportant les impulsions de taxation, pour la conversion analogique-numérique d'autres signaux (RSSI, AD3, AD4), et
le signal (MPCINP) comportant les impulsions de taxation et les autres signaux (RSSI, AD3, AD4) sont appliqués à chaque fois à une entrée d'un circuit multiplexeur (3), le circuit multiplexeur (3) dont la sortie est reliée au circuit convertisseur analogique-numérique (5) reliant l'une de ses entrées à sa sortie en fonction d'un signal de commande (a).

10. Circuit selon la revendication 9,
**caractérisé par le fait que** le circuit convertisseur analogique-numérique (5) est relié à un autre circuit multiplexeur (4) qui envoie le signal de sortie du circuit convertisseur analogique-numérique (5) à l'une des voies de signal en fonction du signal de commande (a), l'une des ces voies de signal conduisant au circuit comparateur numérique (9).

11. Circuit selon la revendication 10,
**caractérisé par le fait qu'**une unité de commande (17) est prévue pour produire le signal de commande (a) pour les deux multiplexeurs (3, 4), l'unité de commande (17) produisant le signal de commande (a) de telle sorte que, pour une opération d'échantillonnage sur deux, le signal (MPCINP) comportant les impulsions de taxation est mesuré par le circuit convertisseur analogique-numérique (5), est converti d'analogique en numérique et est envoyé au circuit comparateur numérique (9).

12. Circuit selon l'une des revendications précédentes,
**caractérisé par le fait que** la valeur de référence du circuit comparateur numérique (9) est programmable.

13. Circuit selon l'une des revendications précédentes,
**caractérisé par le fait que** l'hystérésis du circuit comparateur numérique (9) est programmable.

14. Circuit selon l'une des revendications précédentes,
**caractérisé par le fait que** le circuit est utilisé pour la reconnaissance d'impulsions de taxation dans une station de base de radiocommunication mobile.
